# FASCICULE DE BREVET EUROPEEN

(11) **EP 1 253 462 B1**
(45) Date de publication et mention de la délivrance du brevet: **05.11.2008**
(21) Numéro de dépôt: 02291048.3
(22) Date de dépôt: 25.04.2002
(51) Int. Cl.: G02F 1/225

(54) **Emetteur optique comprenant un modulateur compose d'une pluralite d'éléments de modulation**
Optischer Sender mit einem Modulator aus einer Vielzahl von Modulationselementen
Optical transmitter comprising a modulator made of a plurality of modulating elements

(30) Priorité: 27.04.2001 FR 0105758
(43) Date de publication de la demande: 30.10.2002
(73) Titulaire: Avanex Corporation, Fremont, CA 94538 (US)
(72) Inventeur: Burie, Jean-René, 91680 Bruyeres le Chatel (FR); Andre, Philippe, 31300 Toulouse (FR)
(74) Mandataire: Feray, Valérie

(56) Documents cités:
- US-A- 3 827 000
- US-A- 4 776 657
- PATENT ABSTRACTS OF JAPAN vol. 2000, no. 13, 5 février 2001 (2001-02-05) & JP 2000 284241 A (MITSUBISHI ELECTRIC CORP), 13 octobre 2000 (2000-10-13)
- PATENT ABSTRACTS OF JAPAN vol. 014, no. 434 (P-1107), 18 septembre 1990 (1990-09-18) & JP 02 170142 A (NEC CORP), 29 juin 1990 (1990-06-29)
- TANAKA H ET AL: "OPTICAL SHORT PULSE GENERATION BY DOUBLE GATE OPERATION OF TANDEM CONNECTED ELECTROABSORPTION MODULATORS DRIVEN BY SINUSOIDAL VOLTAGES" ELECTRONICS LETTERS, IEE STEVENAGE, GB, vol. 29, no. 16, 5 août 1993 (1993-08-05), pages 1449-1451, XP000388437 ISSN: 0013-5194
- MARTIN G ET AL: "Short optical pulse generation at 20 GHz repetition rate using integrated laser-modulators-amplifier" ECOC 2000. 26TH EUROPEAN CONFERENCE ON OPTICAL COMMUNICATION, PROCEEDINGS OF 26TH EUROPEAN CONFERENCE ON OPTICAL COMMUNICATION, MUNICH, GERMANY, 3-7 SEPT. 2000, pages 53-55 vol.2, XP008006614 2000, Berlin, Germany, VDE Verlag, Germany ISBN: 3-8007-2567-3
- MALYUTIN A A: "INTEGRATED OPTICAL ANALOGS OF CLASSICAL INTERFEROMETERS" SOVIET JOURNAL OF QUANTUM ELECTRONICS, AMERICAN INSTITUTE OF PHYSICS. WOODBURY, NY, US, vol. 18, no. 8, 1 août 1988 (1988-08-01), pages 1019-1021, XP000048535
- PATENT ABSTRACTS OF JAPAN vol. 1996, no. 01, 31 janvier 1996 (1996-01-31) & JP 07 234390 A (HITACHI LTD), 5 septembre 1995 (1995-09-05)
- LI G L ET AL: "ULTRAHIGH-SPEED TRAVELING-WAVE ELECTROABSORPTION MODULATOR-DESIGN AND ANALYSIS" IEEE TRANSACTIONS ON MICROWAVE THEORY AND TECHNIQUES, IEEE INC. NEW YORK, US, vol. 47, no. 7, juillet 1999 (1999-07), pages 1177-1183, XP000846021 ISSN: 0018-9480

## Description

La présente invention concerne le domaine des transmissions optiques à haut débit. Dans un tel contexte, il est important d'augmenter le plus possible la bande passante des composants optiques. Pour ce faire et dans le cas d'un émetteur optique, tel qu'un laser par exemple, une solution possible consiste à réduire la capacité intrinsèque du modulateur optique généralement associé audit émetteur. L'invention se situe plus spécifiquement dans le cadre de composants optiques intégrés monolithiques, c'est-à-dire réalisé sur une seule puce de circuit intégré.

Il existe différents types de modulateurs optiques. Les modulateurs à electro-absorption modulent l'onde optique en amplitude par un déplacement du pic d'absorption du matériau constituant le guide d'onde au moyen d'une tension de commande. Les modulateurs Mach-Zender, composés de deux branches, modulent la phase de l'onde optique dans au moins une branche pour réaliser des interférences à la sortie des deux branches. Une tension de commande est appliquée sur au moins une branche, l'autre étant éventuellement reliée à la masse.

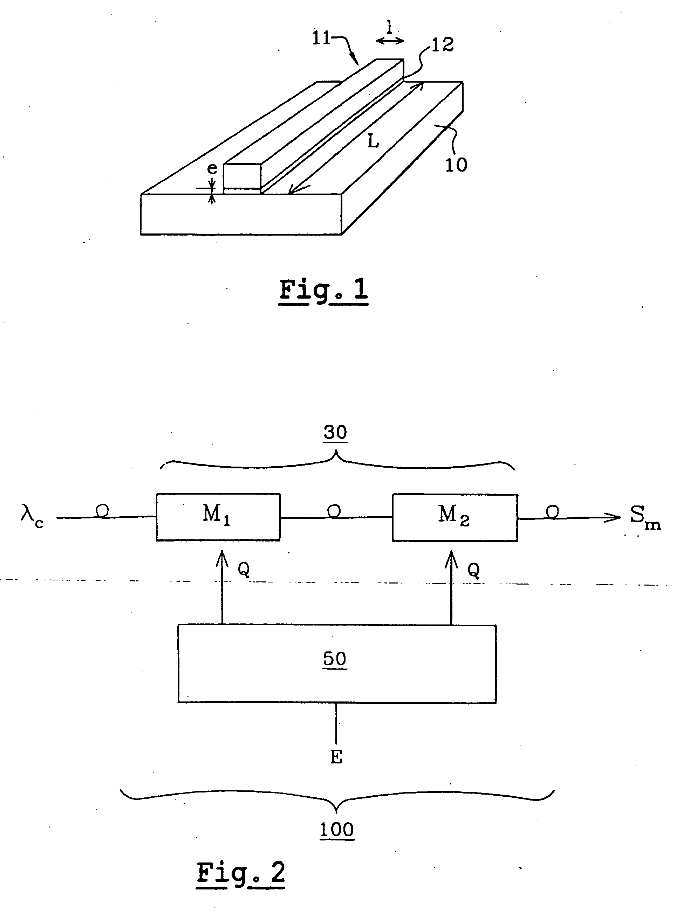

Un modulateur optique à électro-absorption (connu sous le sigle de EAM pour electro-absorption modulator) est illustré schématiquement sur la figure 1. Un tel modulateur est bien connu en soi dans l'état de la technique. Il est composé d'un guide d'onde 11 réalisé sous la forme d'un ruban (mésa) sur un substrat 10 en matériau semi-conducteur (de l'InP par exemple). Le guide d'onde 11 comporte une couche active 12 en matériau semi-conducteur intrinsèque encadrée de deux couches en matériau semi-conducteur dopée chacune d'un type de porteurs différent. Une tension de commande est appliquée sur le guide 11 pour déplacer le pic d'absorption du guide d'onde 11 vers la longueur d'onde de travail et permet de réaliser une modulation d'amplitude de l'onde traversant le guide.

La capacité intrinsèque C d'un modulateur EAM est définie par la relation suivante : C=εε₀(lxL)/e ;

Où 1 et L sont respectivement la largeur et la longueur du guide d'onde 11 du modulateur et e l'épaisseur de la couche active 12 du guide d'onde 11, et où £ et ε₀ représentent des constantes diélectriques.

Pour réduire la capacité C, il faut soit diminuer 1 ou L, soit augmenter e. Or des contraintes physiques et optiques pèsent sur ces paramètres.

Tout d'abord, la largeur 1 du guide d'onde 11 est fixée par les contraintes optiques de propagation des ondes dans le guide 11. Ensuite, l'épaisseur e de la couche active 12 est fixée par les contraintes de fabrication et plus spécifiquement par des contraintes d'épitaxie. De plus, en augmentant l'épaisseur e, on diminue l'efficacité de modulation, ce qui n'est pas recherché. Enfin, la longueur L du guide d'onde 11 peut être réduite pour diminuer la capacité C. Cependant une telle diminution de la longueur L va réduire l'absorption, diminuant du même coup les performances du composant.

Dans le cas d'un modulateur Mach-Zender discret, le problème de la réduction de la capacité est la même pour chaque branche et la solution proposée par la présente invention s'applique de la même manière.

Le but de la présente invention est de résoudre les inconvénients cités, c'est à dire de réduire la capacité d'un modulateur sans diminuer ses performances optiques.

A cet effet, l'invention propose de réaliser un émetteur optique comprenant un modulateur électro-optique constitué d'une pluralité d'éléments de modulation, chaque élément ayant une longueur de guide d'onde réduite, donc une capacité réduite d'autant, et contrôlé chacun par le même signal électrique de commande.

US 3827000 décrit un modulateur optique comprenant une pluralité de cristaux électro-optiques pour produire une modulation de la phase ou de l'amplitude. Des guides d'ondes transparents focalisant, d'indices de réfraction variés, sont disposés sur l'axe optique entre des cristaux adjacents afin d'offrir des caractéristiques de sensibilité et de bande passante améliorées.

JP 2170142 décrit un dispositif avec une électrode de masse le long de deux parties de guide d'onde disposées sur un cristal plan à proximité l'une de l'autre et des électrodes de signal séparées vers plusieurs pièces le long de l'autre guide d'onde.

L'invention concerne plus spécifiquement un émetteur optique comprenant un modulateur électro-optique contrôlé par un circuit électronique de commande, comprenant en ce que ledit modulateur comprend N éléments de modulation comportant N électrodes de commande distinctes et optiquement couplés en série, et en ce que ledit circuit électronique de commande est apte à délivrer N signaux électriques identiques sur N sorties distinctes, chacune des N sorties étant reliée respectivement à chacune des N électrodes de commande des éléments de modulation caractérisé en ce que le circuit électronique de commande est intégré au modulateur électro-optique. Selon les applications, les éléments de modulation sont des modulateurs à électro-absorption ou des modulateurs Mach-Zender.

Selon les modes de réalisation, le circuit électronique de commande est un multiplexeur ou un amplificateur à une ou M entrée(s) et N sorties synchronisées.

Selon une caractéristique avantageuse, l'émetteur optique est un composant intégré monolithique.

D'autres particularités et avantages de l'invention apparaîtront clairement à la lecture de la description qui suit, faite à titre d'exemple illustratif et non limitatif et en regard aux figures annexées sur lesquels :
- la figure 1, déjà décrite, est un schéma d'un modulateur à électro-absorption connu de l'état de la technique ;
- la figure 2 illustre schématiquement la structure d'un émetteur optique selon la présente invention.

L'objectif de la présente invention est de réaliser un émetteur optique comprenant un modulateur électro-optique présentant les performances requises pour une transmission de données à haut débit.

Pour réduire la capacité d'un modulateur, on a vu qu'une solution possible consiste à diminuer la longueur de son guide d'onde.

La présente invention propose donc de réaliser un modulateur constitué d'une pluralité d'éléments de modulation M_{N} de longueur réduite, donc de capacité réduite, et de les placer optiquement en série pour pallier au désavantage de la diminution de l'absorption de l'onde optique se propageant dans le modulateur. Ainsi, l'absorption globale de l'onde optique émise par l'émetteur sera la somme des absorptions dans chacun des éléments de modulation placés en série, alors que la bande passante sera élargie du fait de la diminution de la capacité intrinsèque de chaque élément.

La mise en oeuvre de l'invention est illustrée schématiquement sur la figure 2. Un exemple est donné avec deux éléments de modulation M₁ et M₂, mais l'invention s'applique de la même manière à N éléments de modulation disposés en série.

Un émetteur 100, tel qu'un laser, doit émettre, à partir d'une source continue de longueur d'onde λ_{c}, un signal optique modulé Sₘ. L'émetteur 100 comporte un modulateur électro-optique 30 constitué de N (deux dans l'exemple) éléments de modulation M_{N} (M₁, M₂) disposés optiquement en série.

Selon un mode de réalisation préférentiel, les éléments de modulation M_{N} sont constitués de modulateurs à électro-absorption (EAM). Mais l'invention s'applique également à des éléments de modulation MN constitués de modulateurs Mach-Zender discrets (MZ).

Un signal électrique de commande Q est appliqué sur le guide d'onde de chaque élément de modulation M_{N}. Le signal électrique de commande Q doit être identique pour chaque élément de modulation M_{N} avec un retard accordé au retard du signal lumineux entre les éléments M_{N}. Les éléments de modulation M_{N} du modulateur 30 sont ainsi électriquement disposés en parallèle.

A cet effet, le modulateur 30 est commandé par à un circuit électronique 50 à une entrée E et N sorties synchronisées Q. Un tel circuit de commande 50 est connu dans l'art antérieur et peut être réalisé facilement par un homme du métier. Il peut s'agir par exemple d'un multiplexeur à une entrée et N sorties, ou d'un circuit amplificateur recevant un signal électrique de faible amplitude en entrée (0.4 Volt par exemple) est sortant N signaux électriques synchronisés de commande Q (de 3 à 4 Volt par exemple). En particulier, un tel circuit amplificateur est décrit dans la publication ECOC 2000, septembre 2000 Munich, intitulée « *Short optical pulse génération at 20 GHZ répétition rate using integrated laser - modulators - amplifier » de G. Martin, E. Vergnol, A. Carence, et A. Ramdane ».*

Selon l'invention, le modulateur 30 et le circuit électronique de commande 50 sont intégrés sur une même puce de circuit intégré. En particulier, le modulateur peut être intégré à l'émetteur 100. Une telle intégration monolithique du composant optique 100 permet d'éviter les problèmes de déphasage de l'onde optique. Une telle intégration monolithique des éléments de modulation M_{N} avec l'émetteur est possible parce que chaque élément de modulation est commandé avec le même signal électrique parallèle, ce qui permet une électrode de terre commune aux éléments de modulation et à l'émetteur.

Ainsi, un modulateur de longueur L et de capacité C a été remplacé, selon l'exemple illustré de l'invention, par 2 éléments de modulation M₁ et M₂ de longueur L/2. Il en résulte que la longueur globale du modulateur 30 est 2xL/2, c'est à dire L, donc que l'absorption n'a pas été pénalisée ; et que la capacité intrinsèque du modulateur M a été réduite à C/2 par la mise en série de ces deux éléments de modulation M₁ et M₂, donc que la bande passante de l'émetteur 100 a été élargie.

## Revendications

1. Composant optique (100) comprenant un modulateur électro-optique (30) contrôlé par un circuit électronique de commande (50) et comprenant N éléments de modulation (MN) comportant N électrodes de commande distinctes et optiquement couplés en série, ledit circuit électronique de commande (50) étant apte à délivrer N signaux électriques identiques (Q) sur N sorties distinctes, chacune des N sorties étant reliée respectivement à chacune des N électrodes de commande des éléments de modulation (MN),
**caractérisé en ce que** le circuit électronique de commande (50) est intégré au modulateur électro-optique (30).

2. Composant optique selon la revendication 1, **caractérisé en ce que** les éléments de modulation (MN) sont des modulateurs à électro-absorption (EAM).

3. Composant optique selon la revendication 1, **caractérisé en ce que** les éléments de modulation (MN) sont des modulateurs Mach-Zender discrets (MZ).

4. Composant optique selon l'une quelconque des revendications 1 à 3, où ledit circuit électronique de commande (50) est apte à délivrer les N signaux électriques identiques (Q) respectivement retardés d'un retard accordé au retard du signal lumineux entre les éléments de modulation (MN).

5. Composant optique selon l'une quelconque des revendications 1 à 4, **caractérisé en ce que** le circuit électronique de commande (50) est un multiplexeur à M entrées et N sorties synchronisées.

6. Composant optique selon l'une quelconque des revendications 1 à 4, **caractérisé en ce que** le circuit électronique de commande (50) est un amplificateur à une entrée et N sorties synchronisées.

7. Composant optique selon l'une quelconque des revendications précédentes, **caractérisé en ce qu'**il comprend un émetteur optique intégré monolithiquement.

8. Emetteur optique comprenant un composant optique selon l'une quelconque des revendications précédentes.

## Claims

1. An optical component (100), comprising an optoelectronic modulator (30) controlled by an electronic control circuit (50), and comprising N modulation elements (MN) having N separate control electrodes in optical series coupling, said electronic control circuit (50) being capable of outputting N identical electrical signals (Q) at N separate outputs, each of the N outputs respectively being connected to each of the N control electrodes of the modulation elements (MN),
**characterized in that** the electronic control circuit (50) is integrated into the optoelectronic modulator (30).

2. The optical component according to claim 1, **characterized in that** the modulation elements (MN) are electroabsorption modulators (EAM).

3. The optical component according to claim 1, **characterized in that** the modulation elements (MN) are discrete Mach-Zehnder modulators (MZ).

4. The optical component according to any of claims 1 to 3, wherein said electronic control circuit (50) is capable of outputting the N identical electrical signals (Q) respectively delayed by a time delay tuned to the time delay of the light signal between the modulation elements (MN).

5. The optical component according to any of claims 1 to 4, **characterized in that** the electronic control circuit (50) is a multiplexer with M inputs and N synchronized outputs.

6. The optical component according to any of claims 1 to 4, **characterized in that** the electronic control circuit (50) is an amplifier with one input and N synchronized outputs.

7. The optical component according to any of the preceding claims, **characterized in** comprising a monolithically integrated optical emitter.

8. The optical emitter comprising an optical component according to any of the preceding claims.

## Patentansprüche

1. Optisches Bauelement (100), umfassend einen optoelektronischen Modulator (30), der durch eine elektronische Steuerschaltung (50) kontrolliert wird, und umfassend N Modulationselemente (MN) mit N getrennten Steuerelektroden, die optisch in Reihe gekoppelt sind, wobei die elektronische Steuerschaltung (50) in der Lage ist, N identische elektrische Signale (Q) an N getrennten Ausgängen abzugeben, wobei jeder der N Ausgänge jeweils mit einer der N Steuerelektroden der Modulationselemente (MN) verbunden ist,
**dadurch gekennzeichnet, dass** die elektronische Steuerschaltung (50) in den optoelektronischen Modulator (30) integriert ist.

2. Optisches Bauelement nach Anspruch 1, **dadurch gekennzeichnet, dass** die Modulationselemente (MN) Elektroabsorptionsmodulatoren (EAM) sind.

3. Optisches Bauelement nach Anspruch 1, **dadurch gekennzeichnet, dass** die Modulationselemente (MN) diskrete Mach-Zehnder-Modulatoren (MZ) sind.

4. Optisches Bauelement nach einem der Ansprüche 1 bis 3, wobei die elektronische Steuerschaltung (50) in der Lage ist, die N identischen elektrischen Signale (Q) abzugeben, die jeweils um eine Verzögerung verzögert sind, die auf die Verzögerung des Lichtsignals zwischen den Modulationselementen (MN) abgestimmt ist.

5. Optisches Bauelement nach einem der Ansprüche 1 bis 4, **dadurch gekennzeichnet, dass** die elektronische Steuerschaltung (50) ein Multiplexer mit M Eingängen und N synchronisierten Ausgängen ist.

6. Optisches Bauelement nach einem der Ansprüche 1 bis 4, **dadurch gekennzeichnet, dass** die elektronische Steuerschaltung (50) ein Verstärker mit einem Eingang und N synchronisierten Ausgängen ist.

7. Optisches Bauelement nach einem der vorhergehenden Ansprüche, **dadurch gekennzeichnet, dass** es einen monolithisch integrierten optischen Sender umfasst.

8. Optischer Sender, umfassend ein optisches Bauelement nach einem der vorhergehenden Ansprüche.
